# EUROPEAN PATENT APPLICATION

(11) **EP 3 406 510 A1**
(43) Date of publication of application: **28.11.2018**
(21) Application number: 17173106.0
(22) Date of filing: 26.05.2017
(51) Int. Cl.: B62J 6/10, B62J 99/00

(54) **POWER GENERATION DEVICE FOR BICYCLE**

(71) Applicant: Guan Hung Technology Co., Ltd., Taichung City 40861 (TW)
(72) Inventor: Lee, Wen-Sung, 40861 TAICHUNG CITY (TW)
(74) Representative: Cabinet Chaillot

(57) **Abstract**

A power generation device is installed to a bicycle crank to provide electric power to electronic products. The power generation device includes a sensor for sensing the speed of the bicycle and the crank, and generates a speed info. A micro-controller is electrically connected to the sensor and a power supply unit, and includes a transfer unit, a switch unit and an output unit. The speed info is transferred to the transfer unit and converted into transformed signals. The switch unit activates the power supply unit according to the transformed signals. When the sensor detect that the bicycle moves at inconstant speed and the crank rotates continuously, the output unit delivers electric power to the electronic products. When the sensor detects that the bicycle moves at constant speed and the crank rotates continuously, the output unit shuts off the power supply unit, and the power supply unit stores power.

## Description

### BACKGROUND OF THE INVENTION

### 1. Fields of the invention

The present invention relates to a power generation device for a bicycle, and more particularly, to a power generation device installed to the crank of a bicycle and activated when the crank is rotated.

### 2. Descriptions of Related Art

There are many different types of electronic accessories used when enjoying cycling, and these electronic accessories such as cellular phones, GPS, flash lights, and the like use battery to provide electric power. This means that the users have to purchase batteries to support the use of the electronic accessories. Some bicycle manufacturers think of power generation devices which generate power during ringing bicycles, and the electric power can one of the power sources to the electronic accessories. The power generation hubs are developed to generate power and installed to the center of the front wheel and/or the rear wheel. The power generation hubs are connected with spokes and a motor is installed in the hubs.

However, the power generation hubs installed to the wheels receive vibration from the ground, and the power generation hubs shakes when riding on an uneven road. The vibration affects the transmission of the power which cannot provide power to the electronic accessories in a stable status. Besides, the operation of the power generation hubs depend on rotation of the wheels, when the bicycle is stationary and does move, no power is generated.

The present invention intends to provide a power generation device installed to the crank of a bicycle, and the power generation device is activated when the crank is rotated.

### SUMMARY OF THE INVENTION

The present invention relates to a power generation device installed to a crank of a bicycle to provide electric power to electronic products. The power generation device comprises a sensor, a power supply unit and a micro-controller. The sensor senses the speed of the bicycle and the treading speed of the crank so as to generate a speed info. The micro-controller is electrically connected to the sensor and the power supply unit. The micro-controller has a transfer unit, a switch unit and an output unit. The speed info is transferred to the transfer unit of the micro-controller and converted into transformed signals. The switch unit activates the power supply unit according to the transformed signals.

When the sensor detects that the bicycle moves at inconstant speed and the crank rotates continuously, the output unit delivers electric power to the electronic products. When the sensor detects that the bicycle moves at constant speed and the crank rotates continuously, the output unit stops the output of the power supply unit, and the power supply unit stores power.

Preferably, the micro-controller includes a setting unit which sets a range that the output unit outputs power from the power supply unit, and sets the sensor to sense the speed of the bicycle and the treading speed of the crank.

Preferably, the micro-controller includes a manual switch unit which controls the switch unit to operate the power supply unit.

Preferably, an operation member is connected to the bicycle and electrically connected to the micro-controller and the power supply unit. The operation member includes a control interface which includes a power status menu, a speed record menu, a mileage menu, a power-supply menu and a wire-less connection menu. The power status menu displays status of the power supply unit. The speed record menu records the current speed of the bicycle and the current treading speed of the crank. The mileage menu displays the distance of the current travel and the crank total distance travelled. The power-supply menu displays connections with the electronic products and controls operation of the electronic products. The wire-less connection menu displays connection, transmission and adjustment status with a mobile device.

Preferably, the power supply unit is a variable speed motor.

The primary object of the present invention is to provide a power generation device, and when the sensor detects that the bicycle moves at constant speed and the crank rotates continuously, the output unit shuts off the power supply unit, and the power supply unit stores power. This optimizes the use of the electric power generated by the power generation device.

The present invention will become more apparent from the following description when taken in connection with the accompanying drawings which show, for purposes of illustration only, a preferred embodiment in accordance with the present invention.

### BRIEF DESCRIPTION OF THE DRAWINGS

Fig. 1 shows the block diagram of the power generation device of the present invention;
Fig. 2 shows that the power supply unit outputs electric power to electronic products when the bicycle moves at inconstant speed, and
Fig. 3 shows that the power supply unit stores electric power when the bicycle moves at constant speed.

### DETAILED DESCRIPTION OF THE PREFERRED EMBODIMENT

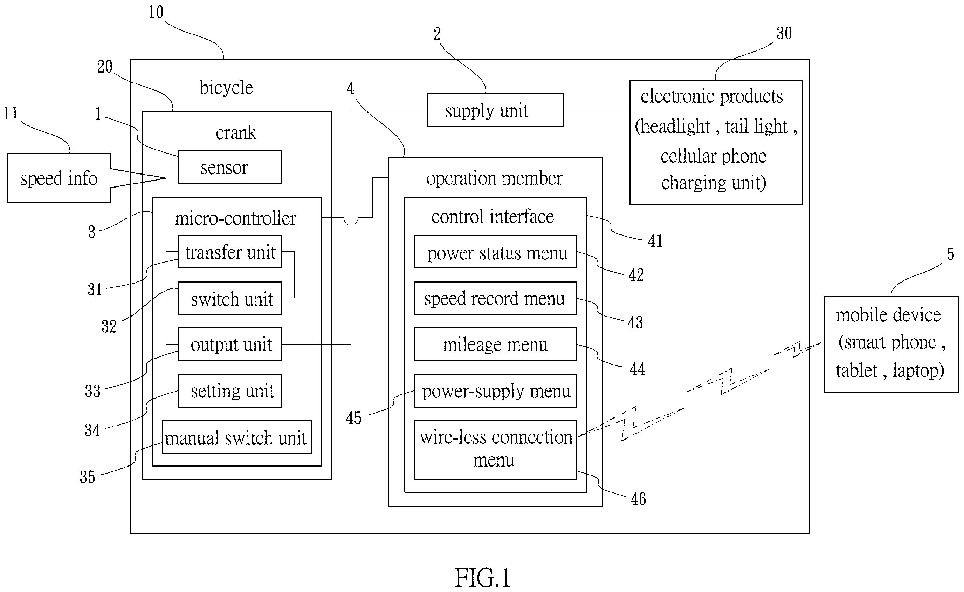

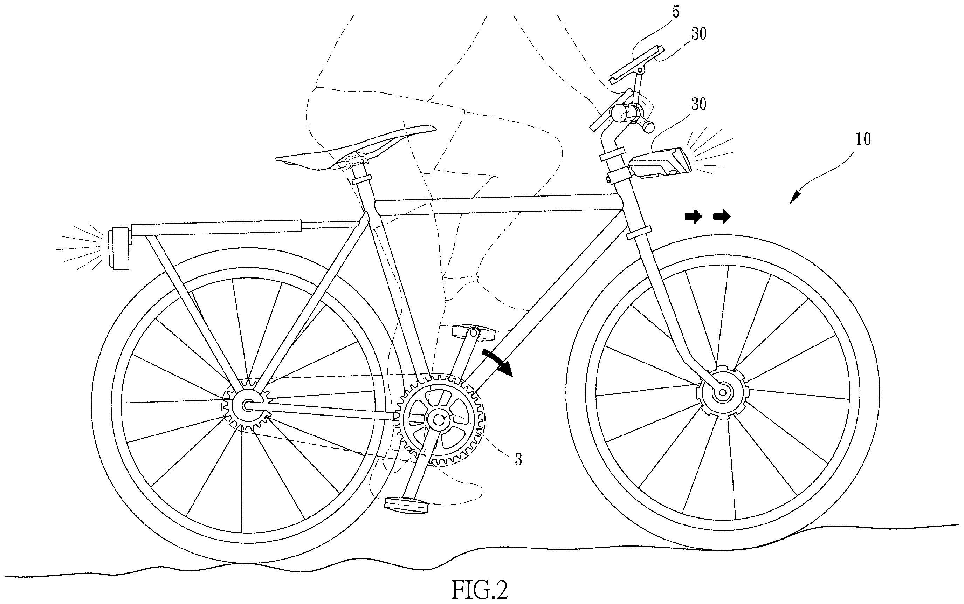

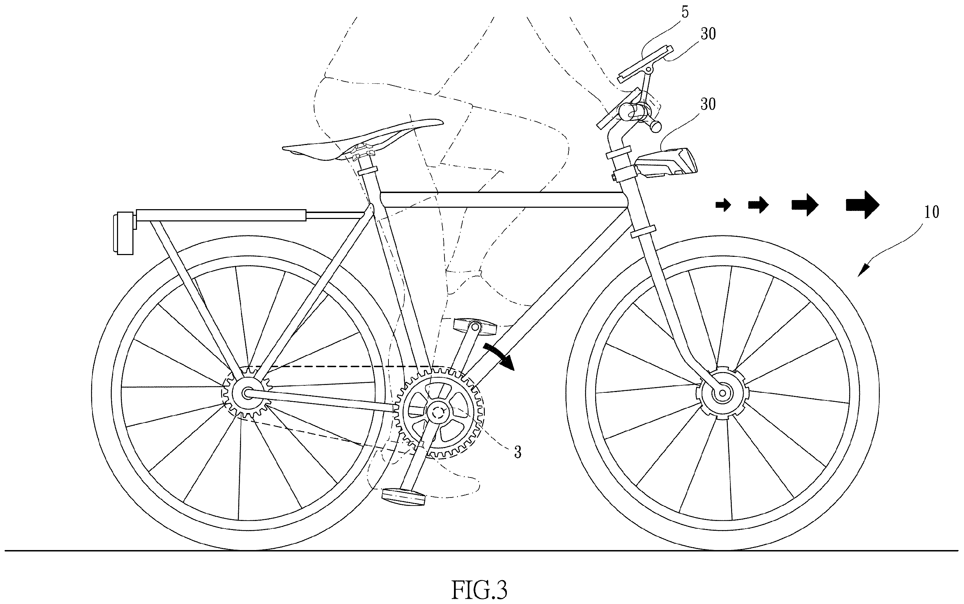

Referring to Figs. 1 to 3, the power generation device of the present invention is installed to the crank 20 of a bicycle 10 so as to provide electric power to electronic products 30 such as headlight, tail light, cellular phone charging unit or the like. The power generation device comprises a sensor 1 for sensing speed of the bicycle 10 and treading speed of the crank 20 so as to generate a speed info 11.

A micro-controller 3 is electrically connected to the sensor 1 and a power supply unit 2. The micro-controller 3 includes a transfer unit 31, a switch unit 32 and an output unit 33. The speed info 11 is transferred to the transfer unit 31 of the micro-controller 3 and converted into transformed signals. The switch unit 32 activates the power supply unit 2 to output electric power or to store electric power according to the transformed signals. When the sensor 1 detects that the bicycle 1 moves at inconstant speed and the crank 20 rotates continuously, the output unit 33 outputs electric power to the electronic products 30.

When the sensor 1 detects that the bicycle 1 moves at a constant speed and the crank 20 rotates continuously, the output unit 33 shuts off the power supply unit 2, and the power supply unit 2 stores power. Specifically, assume that the bicycle 10 moves along a downhill road or a flat road at a constant speed for a period of time, and the cranks 20 continuously rotates. The sensor 1 detects the above mentioned factors and transfers the speed info 11 to the micro-controller 3, and the speed info 11 is converted into transformed signals by the transfer unit 31. The switch unit 32 stops the output of the power supply unit 2, and the power supply unit 2 starts to store electric power.

Because different users apply different forces and speed to the crank 20, therefore, the micro-controller 3 includes a setting unit 34 which sets a range that the output unit 3 outputs power from the power supply unit 2, and sets the sensor 1 to sense the speed of the bicycle 10 and the treading speed of the crank 20. In other words, the present invention allows the users to adjust the settings of output of the electric power according to the style of riding. The users may adjust the range of the speed of the bicycle 10 and the treading speed of the crank 20 that the sensor 1 detects. This feature can meet the needs of different users. Furthermore, the micro-controller 3 includes a manual switch unit 35 which controls the switch unit 32 to operate the power supply unit 2 according individual needs, as shown in Fig. 1.

In addition, an operation member 4 is connected to the bicycle 10 and electrically connected to the micro-controller 3 and the power supply unit 2. The operation member 4 includes a control interface 41 which includes a power status menu 42, a speed record menu 43, a mileage menu 44, a power-supply menu 45 and a wire-less connection menu 46. The power status menu 42 displays status of the power supply unit 2. The speed record menu 43 records the current speed of the bicycle 10 and the current treading speed of the crank 20. The mileage menu 44 displays the distance of the current travel and the total distance travelled. The power-supply menu 45 displays connections with the electronic products 30 and controls operation of the electronic products 30. The wire-less connection menu 46 displays connection, transmission and adjustment status with a mobile device 5 such as a smart phone, a tablet or a laptop. The users can adjust the setting or transmit information to the power generation device. The power supply unit 2 is a variable speed motor or any known and suitable device.

The present invention not only check the speed of the bicycle 10, and the treading speed of the crank 20 is also monitored to decide the commands to the power supply unit 2. The present invention provides quick response to the bicycle 10 according to the status of operation to the bicycle 10. Therefore, the electric power generated by the present invention can be used efficiently to support the operation of the electronic products 30 on the bicycle 10. The power generation device of the present invention is installed to the crank 20 (middle portion of the bicycle 10) where the vibration transferred to the present invention can be minimized.

While we have shown and described the embodiment in accordance with the present invention, it should be clear to those skilled in the art that further embodiments may be made without departing from the scope of the present invention.

## Claims

1. A power generation device installed to a crank (20) of a bicycle (10) so as to provide electric power to electronic products (30), **characterized in that**:
the power generation device comprises a sensor (1) for sensing speed of the bicycle (10) and treading speed of the crank (20) so as to generate a speed info (11), and
a micro-controller (3) is electrically connected to the sensor (1) and a power supply unit (2), the micro-controller (3) has a transfer unit (31), a switch unit (32) and an output unit (33), the speed info (11) is transferred to the transfer unit (31) of the micro-controller (3) and converted into transformed signals, the switch unit (32) activates the power supply unit (2) according to the transformed signals, when the sensor (1) is adapted to detect that the bicycle (1) moves at inconstant speed and the crank (20) rotates continuously, the output unit (33) is adapted to output electric power to the electronic products (30), when the sensor (1) is adapted to detect that the bicycle (1) moves at a constant speed and the crank (20) rotates continuously, the output unit (33) stops the output of the power supply unit (2), and the power supply unit (2) stores power.

2. The power generation device as claimed in claim 1, wherein the micro-controller (3) includes a setting unit (34) which sets a range that the output unit (3) outputs power from the power supply unit (2), and sets the sensor (1) to sense the speed of the bicycle (10) and the treading speed of the crank (20).

3. The power generation device as claimed in claim 2, wherein the micro-controller (3) includes a manual switch unit (35) which controls the switch unit (32) to operate the power supply unit (2).

4. The power generation device as claimed in claim 3, wherein an operation member (4) is adapted to be connected to the bicycle (10) and electrically connected to the micro-controller (3) and the power supply unit (2), the operation member (4) includes a control interface (41) which includes a power status menu (42), a speed record menu (43), a mileage menu (44), a power-supply menu (45) and a wire-less connection menu (46), the power status menu (42) displays status of the power supply unit (2), the speed record menu (43) is adapted to record a current speed of the bicycle (10) and a current treading speed of the crank (20), the mileage menu (44) displays a distance of a current travel and a total distance travelled, the power-supply menu (45) displays connections with the electronic products (30) and controls operation of the electronic products (30), the wire-less connection menu (46) displays connection, transmission and adjustment status with a mobile device (5).

5. The power generation device as claimed in claim 1, wherein the power supply unit (2) is a variable speed motor.
